# EUROPEAN PATENT APPLICATION

(11) **EP 4 360 424 A1**
(43) Date of publication of application: **01.05.2024**
(21) Application number: 23204468.5
(22) Date of filing: 18.10.2023
(51) Int. Cl.: A01C 7/04, A01C 7/12

(54) **METERING ASSEMBLY**

(30) Priority: 31.10.2022 US 202263420856 P; 13.10.2023 US 202318486698
(71) Applicant: Deere & Company, Moline, IL 61265 (US)
(72) Inventor: GARNER, ELIJAH B, 68163 Mannheim (DE); BORKGREN, STANLEY R, 68163 Mannheim (DE); HARMON, ANDREW W, 68163 Mannheim (DE)
(74) Representative: Reichert, Christian

(57) **Abstract**

A metering assembly (30, 30', 210) for metering a plurality of seeds is disclosed. The metering assembly (30, 30', 210) comprising: a support; and a seed disk; the seed disk comprising a first side, a second side opposite the first side and a central mounting point defining a center of rotation for the seed disk. The metering assembly is an interchangeable metering assembly (30, 30', 210) operable in a first and in a second mode of operation, wherein in the first mode of operation the seed disk comprising a singulating meter element (54) configured to mount to the support for singulating the plurality of seeds; and wherein in the second mode of operation the seed disk comprising a volumetric meter element (222, 310, 410, 510) configured to mount to the support for volumetrically metering the plurality of seeds.

## Description

### BACKGROUND

The present disclosure relates to a seeding system and more particularly to a seed metering assembly for metering a plurality of seeds. The metering assembly comprising a support and a seed disk. The seed disk comprising a first side, a second side opposite the first side and a central mounting point defining a center of rotation for the seed disk.

### SUMMARY

The metering assembly for metering a plurality of seeds, comprises a support and a seed disk, wherein the seed disk comprising a first side, a second side opposite the first side and a central mounting point defining a center of rotation for the seed disk. The metering assembly is further configured to be interchangeable, that means that the metering assembly is operable in a first and in a second mode of operation. In the first mode of operation the seed disk comprises a singulating meter element configured to mount to the support for singulating the plurality of seeds. In the second mode of operation the seed disk comprises a volumetric meter element configured to mount to the support for volumetrically metering the plurality of seeds.

In one aspect, the volumetric metering element may extend from the first side of the seed disk and might be configured to entrain a plurality of seeds.

In another aspect, the volumetric metering element may define a bucket, wherein the bucket is configured to entrain the plurality of seeds.

The bucket is might comprise a first bucket of a plurality of buckets, wherein each bucket of the plurality of buckets is equally spaced about the central mounting point of the seed disk.

Further, the volumetric metering element may define a paddle, and wherein the paddle is configured to entrain the plurality of seeds.

The paddle might comprise a first paddle of a plurality of paddles, wherein each paddle of the plurality of paddles is equally spaced about the central mounting point of the seed disk.

Further, the paddle may extend perpendicularly from the first side of the seed disk to a ring oriented coaxial with the seed disk.

The paddle might be a first paddle and the ring a first ring, wherein the seed disk may further comprise a second paddle that extends parallel to the first paddle between the first ring and a second ring, wherein the second ring is coaxial with the first ring, and wherein the first ring is located between the first side of the seed disk and the second ring.

The interchangeable metering assembly may further comprise a meter housing, wherein the support is a rotational hub, wherein the singulating meter element is a singulating disk configured to rotate about the rotational hub, and wherein the volumetric metering element is a volumetric metering disk configured to rotate about the rotational hub.

The support might be a bracket, wherein the singulating meter element is a singulating meter housing configured to house a singulating disk, and wherein the volumetric metering element is a volumetric meter housing.

Further, the volumetric meter housing may include a meter roller configured to volumetrically meter the plurality of seeds.

The interchangeable metering assembly may further comprise an outlet conduit configured to direct the plurality of seeds to a ground surface, wherein the singulating meter housing is configured to direct the plurality of seeds to the outlet conduit in the first mode of operation, and wherein the volumetric meter housing is configured to direct the plurality of seeds to the outlet conduit in the second mode of operation.

The interchangeable metering assembly may further comprise a motor programmed to actuate the singulating meter element in the first mode of operation and programmed to actuate the volumetric meter element in the second mode of operation.

Furthermore, the interchangeable metering assembly may comprise the seed disk separating the housing into a seed side and a non-seed side, wherein the first side of the seed disk faces the seed side of the housing such that the volumetric metering element is configured to entrain a predetermined quantity of seeds from the seed side of the housing.

Other features and aspects of the disclosure will become apparent by consideration of the following detailed description and accompanying drawings.

### BRIEF DESCRIPTION OF THE DRAWINGS

FIG. 1A is a perspective view of a vehicle having a plurality of seed meters.
FIG. 1B is a perspective view of another vehicle having a plurality of seed meters.
FIG. 2 is a perspective view of one of the seed meters illustrated in FIG. 1A.
FIG. 3 is another perspective view of one of the seed meters illustrated in FIG. 1A.
FIG. 4 is a perspective cutaway view of a seed meter, showing a metering member mounted on a hub.
FIG. 5A is an exploded view of a metering member and a hub according to one embodiment.
FIG. 5B is an exploded view of a metering member and a hub according to another embodiment.
FIG. 6 is a perspective view of a seed meter having a seed meter housing rotated away from an operational position relative to a support structure.
FIG. 7 is a perspective view of a seed meter housing in the operational position.
FIG. 8 is a side view of a motor, a motor output shaft, and a mounting bracket of a seed meter.
FIG. 9 is a perspective view of a pivot point of a seed meter housing relative to the mounting bracket.
FIG. 10 is a perspective view of a housing of a volumetric meter substitutable for the singulating meter of FIG. 1A or positionable on the vehicle of FIG. 1B.
FIG. 11A is a perspective view of a meter roller of the volumetric meter of FIG. 10.
FIG. 11B is a perspective view of the meter roller of FIG. 11A with a corresponding gear train.
FIG. 12 is a front view of a first volumetric disk having buckets.
FIG. 13 is a perspective view of the first volumetric disk shown in FIG. 12.
FIG. 14 is a front view of a second volumetric disk having buckets.
FIG. 15 is a perspective view of the second volumetric disk shown in FIG. 14.
FIG. 16 is a front view of a volumetric disk having paddles.
FIG. 17 is a perspective view of the volumetric disk shown in FIG. 16.

Before any embodiments of the disclosure are explained in detail, it is to be understood that the disclosure is not limited in its application to the details of construction and the arrangement of components set forth in the following description or illustrated in the accompanying drawings. The disclosure is capable of supporting other embodiments and of being practiced or of being carried out in various ways. Also, it is to be understood that the phraseology and terminology used herein is for the purpose of description and should not be regarded as limiting.

### DETAILED DESCRIPTION

Current seeding practices tend to involve one of two types of seeding systems: planters and air seeders. Planters generally singulate or individually meter seeds prior to planting and are generally used to disperse seeds where precise placement is required for maximum yield and the seeding rate permits use of singulating technologies. Air seeders generally meter seeds volumetrically and are generally used in high rate seeding applications and where precise seed placement is of less importance or not practical due to the high rates.

As hybrid seed become more common for small grains, these small grains yield higher production, but generally at a higher cost. A higher cost incentivizes farms to plant costly small grain seeds much more accurately to conserve seeds. In this respect, singulation technology may provide some benefits over volumetric technology. This new behavior with small grains starts to blur the differences between planters and air-seeders, and as this blurring/transition is occurring, a farm might want to purchase a singulation machine for small grains, but still retain the capability of volumetrically planting other seeds that are less expensive or are less possible to singulate (such as barley or oats or other similar crops)

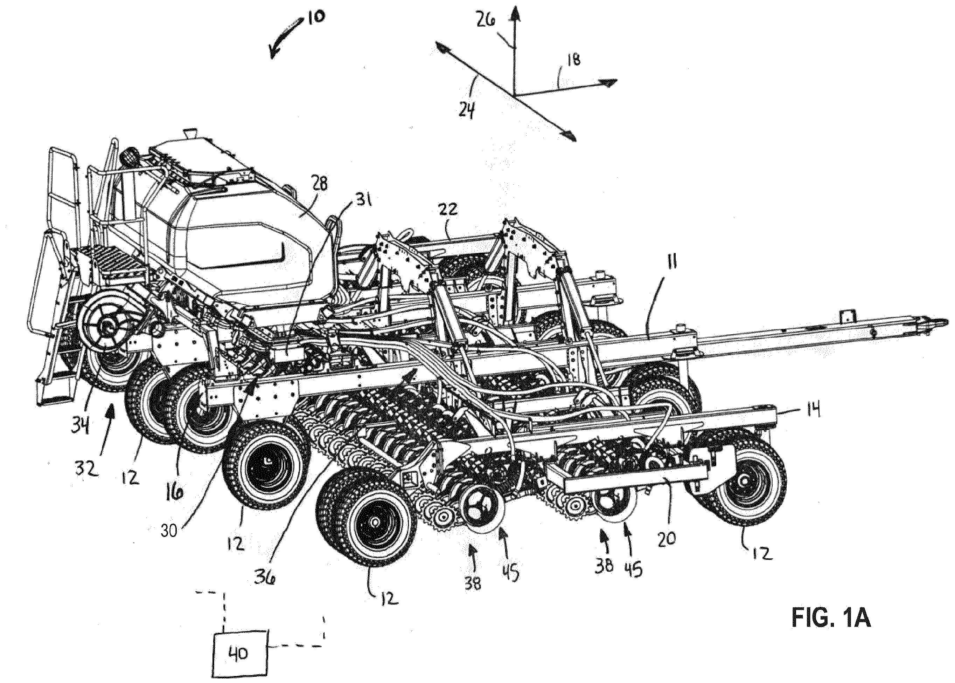

FIG. 1A illustrates a work vehicle 10 according to example embodiments of the present disclosure. The work vehicle 10 may be towed by another vehicle, such as a tractor. Thus, the work vehicle 10 may be a towed work vehicle. In other embodiments, the work vehicle 10 of the present disclosure may be a self-propelled vehicle. In some embodiments, the work vehicle 10 may be an air cart or air seeder. It will be appreciated that the illustrated work vehicle 10 is an example embodiment. One or more features of the present disclosure may be included on a different work vehicle, such as a planter, a commodity cart, or other work vehicle without departing from the scope of the present disclosure.

The work vehicle 10 includes a front end 14, a rear end 16, and a fore-aft axis 18 extending generally between the front and rear ends 14, 16. The work vehicle 10 also includes a first side 20, a second side 22, and a lateral axis 24 extending generally between the first and second sides 20, 22. A vertical axis 26 extends perpendicular to both the fore-aft axis 18 and the lateral axis 24.

Generally, the work vehicle 10 includes a chassis 11 and a plurality of wheels 12. The chassis 11 is a rigid frame that supports the components described in detail herein. The wheels 12 support the chassis 11 and enable movement of the vehicle 10 across the field.

The work vehicle 10 also includes one or more commodity containers 28. The container 28 is supported on the chassis 11 and disposed proximate the rear end 16. Also, in some embodiments, the container 28 is disposed centrally between the first side 20 and the second side 22. The commodity container 28 may contain seed, fertilizer, and/or another particulate or granular commodity.

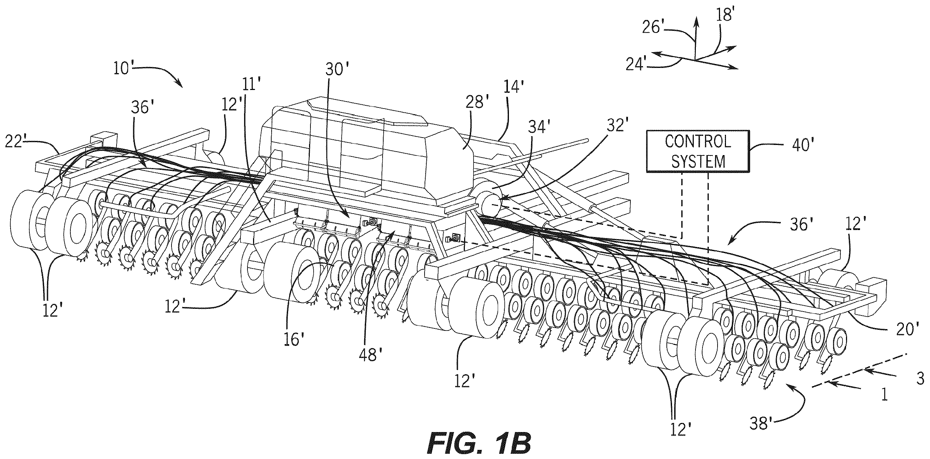

Additionally, the work vehicle 10 includes a metering system 30. The metering system 30 may be a seed on-demand metering system as described herein, or in other embodiments, such as the vehicle 10' shown in Fig. 1B, may include a volumetric meter. The seed on-demand metering system 30 includes nozzles 31 positioned below the container 28 to receive seeds from the container 38 and to communicate with an airflow system 32.

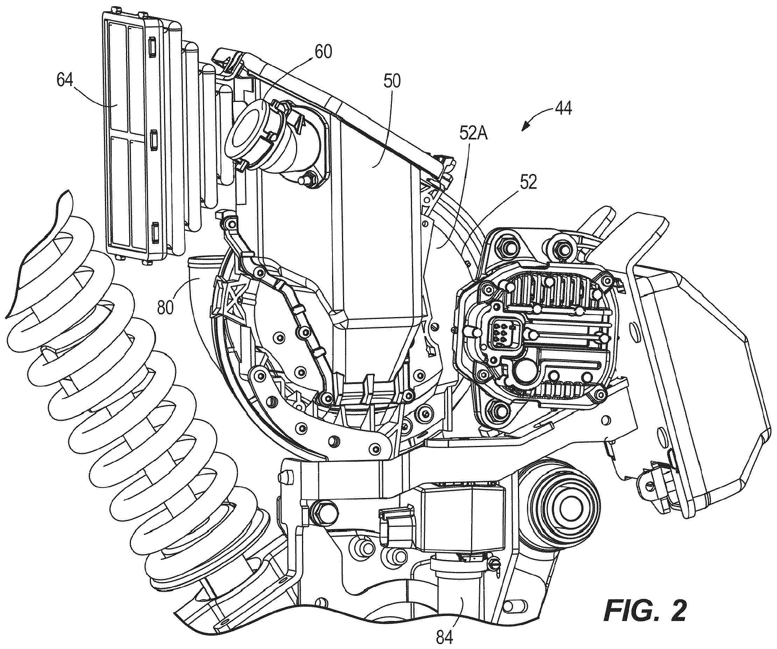

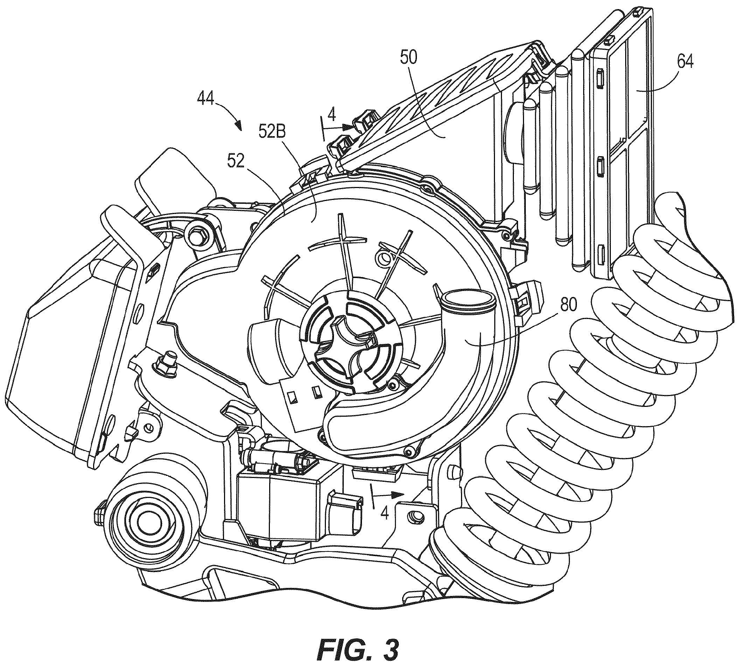

The airflow system 32 includes a fan 34 that generates a flow of air into and through the nozzle 31. The airflow system 32 also includes a plurality of airflow structures (e.g., plenums, tubes, lines, etc.) that receive the air blowing from the fan 34. Particles of the commodity within the nozzle are entrained by the airflow from the fan 34 into the air stream and flow to a distribution system 36. The distribution system 36 includes a plurality of hoses, lines, or other conduits that extend to different areas of the vehicle 10 along the lateral axis 24. The airstream propels particles of the commodity through the distribution system 36 to a plurality of individual row units 45. Each row unit 45 of the vehicle 10 includes a mini hopper 50 and seed meter 44 (Figs. 2-4) for singulating the commodity (e.g., seeds) and a ground engaging system 38 with openers, tillers or other similar implements that prepare the soil for delivery of the seed, fertilizer, or other commodity delivered by the distribution system 36.

The work vehicle 10 may include a control system 40 for controlling flow of the commodity from the commodity container 28 to the row units 45. For example, the control system 40 may control actuation and speed of the airflow system 32. However, in contrast to the vehicle 10' shown in FIG. 1B and described in greater detail below, the seed on-demand metering system 30 is a passive system that may not require any active input or control for moving the commodity.

During operation of the work vehicle 10 (e.g., when towed by a tractor or other towing vehicle across a field), the commodity from the container 28 is entrained by airflow from the airflow system 31 and carried through the distribution system 36 to the row units 45. At each row unit, the commodity accumulates within the mini hopper 50 until an air outlet in the mini hopper 50 is covered by the commodity, thereby generating a pressure build-up within the distribution system 36 upstream of the row unit 45. The increase in air pressure limits further commodity from reaching the row unit 45. The commodity within the mini-hopper 50 is fed (via gravity) to the seeding meter 44, as described in greater detail below, where the commodity is metered and directed to the ground.

FIG. 1B illustrates a work vehicle 10' similar to the work vehicle 10 shown in FIG. 1A, except as otherwise described below. Like elements are labeled with like reference numerals, differentiated by an apostrophe.

The vehicle 10' does not include individual row units for metering the seeds. Rather, all metering occurs at the metering system 30'. The metering system 30' is disposed generally underneath the commodity container 28'. As such, particles of the commodity within the container 28' fall due to gravity toward the metering system 30'. The metering system 30' operates to meter out the commodity from the container 28' at a controlled rate as the vehicle 10' moves across the field.

Moreover, the work vehicle 10' includes an active control system 40'. The control system 40' is in communication with and configured for controlling the metering system 30', the airflow system 32', and/or other components of the work vehicle 10'. The work vehicle 10' may wholly support the control system 40', or the control system 40' may include components that are remote from the vehicle 10'. The control system 40' may be in electronic, hydraulic, pneumatic, mechanical, or other communication with the metering system 30' and/or the airflow system 32'. In some embodiments, the control system 40' is in communication with actuators, sensors, and/or other components of the work vehicle 10'.

During operation of the work vehicle 10', the commodity falls from the container 28' toward the metering system 30'. The control system 40' controls the metering system 30' (e.g., by controlled actuation of a drive unit), which allows a controlled quantity of particles to pass into the airflow system 32' at a predetermined rate. The control system 40' also controls the fan 34' for generating a continuous airstream that blows through the airflow system 32', receives the particles metered out from the metering system 30, and flows through the distribution system 36' across the work vehicle 10' to the soil.

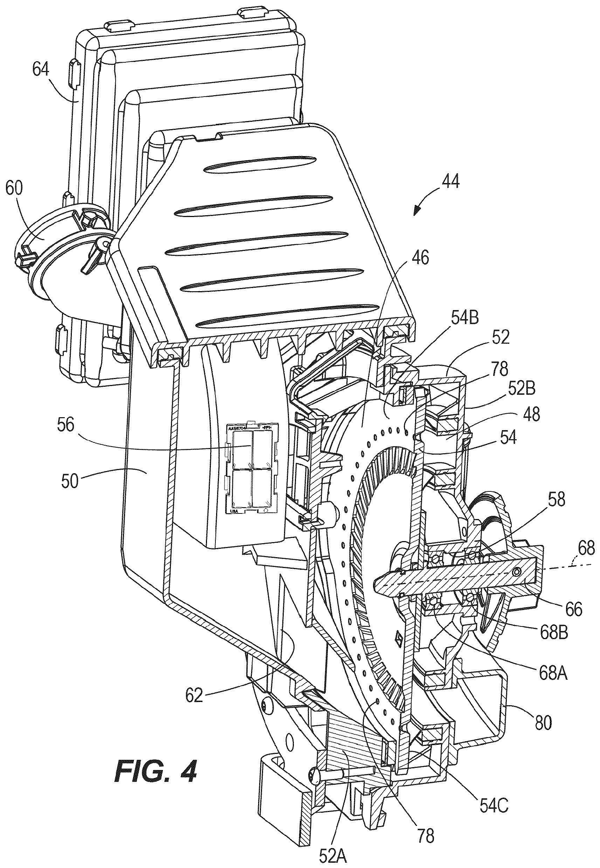

As shown in FIGS. 2-4, the seed meter 44 includes a mini hopper 50, a seed disk housing 52 supporting a metering member such as a seed meter disk (or simply seed disk or singulating disk 54, shown at least in FIG. 4) a singulator (not shown), and a motor 72 for driving the seed disk 54. The seed disk 54 is an example of a singulating meter element.

The mini-hopper 50 is a receptacle that accepts seeds or other agricultural product from the storage tank 28 via a seed inlet 60. As shown, the seed inlet 60 is located adjacent to the top of the mini-hopper 50 such that seeds entering the mini-hopper 50 are directed by gravity to a seed outlet or seed disk housing inlet 62 (FIG. 4). The mini-hopper 50, and as shown, specifically the seed inlet 60, includes one or more air flow exhaust screens 56, which provides a passage for air, but not seeds, to pass through such that the airflow that entrains the seeds to the mini-hopper 50 is expelled therethrough. As the seeds fill the mini-hopper 50, the seeds cover the exhaust screens 56, thereby generating a back-pressure that slows the upstream air stream velocity to the point where the air stream will no longer pick up seeds at the nozzle, and will not deliver additional seeds to the mini-hopper 50 until the level of seeds within the mini-hopper 50 decreases to decrease the back-pressure. In some embodiments, an exhaust screen may not be necessary.

The mini-hopper 50 further includes an air inlet 64 positioned adjacent to the seed inlet 60 and operable to provide an airflow through the mini-hopper 50 and into the seed disk housing 52.

The seed disk housing 52 is formed in two halves, a front or seed side of the seed disk housing 52A and a rear or vacuum side of the seed disk housing 52B. The seed disk 54 is housed therebetween. A hub 66 is rotatably mounted within bearings 68A, 68B positioned within a cavity or aperture 58 in the rear side of the seed disk housing 52B and defines an axis of rotation 68. The seed disk 54 is mounted to the hub 66 and rotates therewith about the axis of rotation 68.

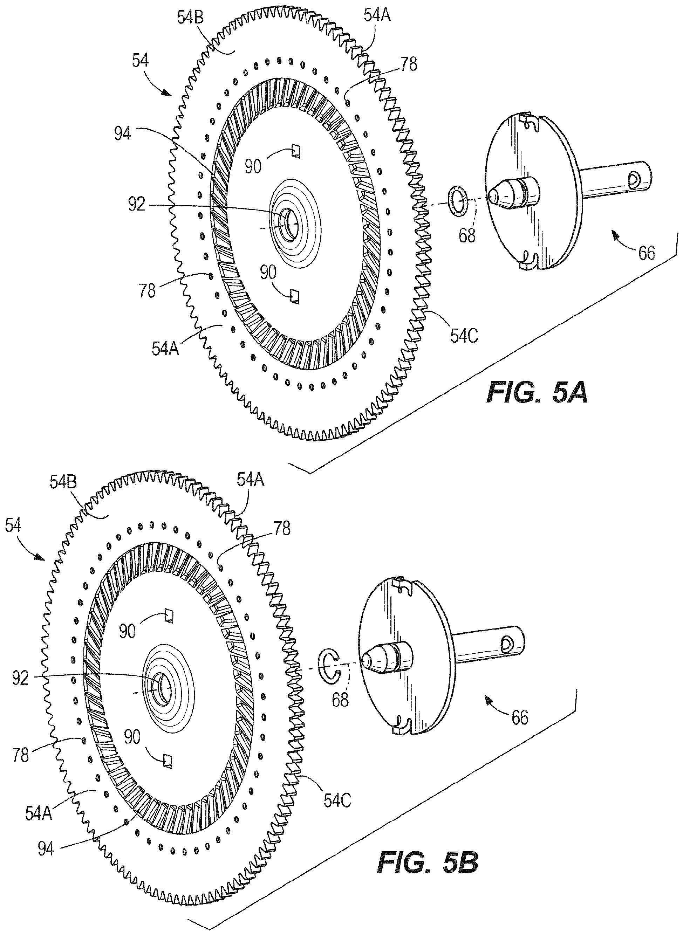

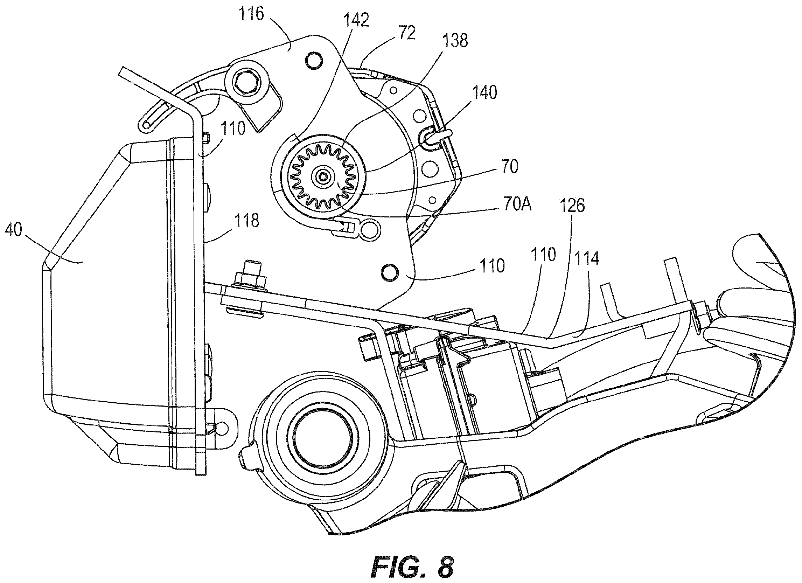

The seed disk 54 is a gear (e.g., a spur gear) defined by a wheel having radially extending teeth 54A, a seed-side face 54B, and a vacuum-side face 54C. A first cavity 46 is defined within the seed disk housing 52 between the seed side of the seed disk housing 52A and the seed disk 54. A second cavity 48 is defined within the seed disk housing 52 between the vacuum side of the seed disk housing 52B and the seed disk 54. Both of the faces 54B, 54C are generally planar, though they can deviate from planar to define apertures (such as apertures 78, 90, 92 and agitator pockets 94) and to accommodate mounting to the hub 66, as shown in FIGS. 5A-6. The teeth 54A mesh with teeth 70A (FIG. 8) of a motor output gear 70 (either directly or indirectly via an intermediate gear) such that actuation of the motor 72 rotates the motor output gear 70, thereby rotating the seed disk 54 about the axis of rotation 68. The motor 72 and the output gear 70 represent one embodiment of a seed meter drive unit that is selectively energized to drive rotation of the seed disk 54. Rotation of the seed disk 54 can be carried out in a single, predefined rotational direction R by the drive unit. The seed disk 54 further includes a plurality of seed openings 78 located on the seed-side face 54B and extending at least partially through to the vacuum-side face 54C such that each seed opening 78 defines a passage through the seed disk 54. The seed openings 78 may be adapted for a particular predetermined seed type so that the seeds, which are larger than the seed openings 78 so as not to pass through the seed openings 78, can be retained against the seed openings 78 and carried away from the seed pool as the seed disk 54 rotates. The seed openings 78 are provided in a circumferential array along the seed disk 54. The spacing of the seed openings 78 may be even or uneven, although a full circumferential array of seed openings 78 with even spacing is hereby illustrated. Further, as shown in FIGS. 5A and 5B, the circumferential array of seed openings 78 may be arranged in more than one row, although a single row is optional. As illustrated, each row of seed openings 78 is located on the seed disk 54 at a single, fixed radial distance from the central axis of rotation 68. Seed agitators of various construction, such as the agitator pockets 220, may be located in a circumferential array at a radial position adjacent to the row(s) of seed openings 78. For example, FIGS. 5A and 5B illustrate a circumferential array of agitators consisting of a single row of agitator pockets 220 formed in the seed-side face 54B of the seed disk 54. The row of agitator pockets 220 is located radially inward of the seed openings 78. The agitator pockets 220 assist in stirring-up or agitating the seeds in the seed pool for encouraging seed retention within the seed openings 78 as the seed disk 54 rotates.

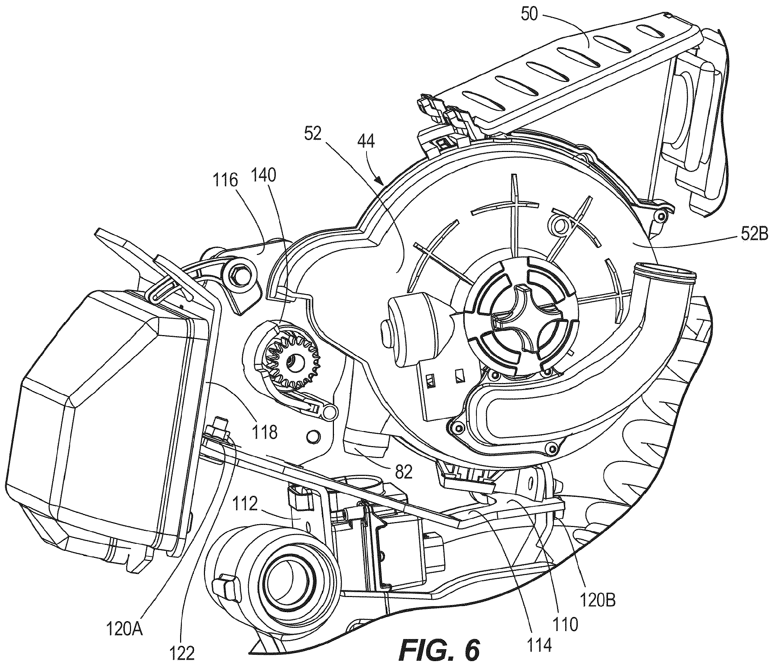

The rear side of the seed disk housing 52B includes an air outlet 80 that is attachable to a vacuum source (not shown) to draw air from within the rear side of the seed disk housing 52B, thereby creating a pressure differential across the seed disk 54. The seed disk housing 52 further includes a seed outlet or opening 82 (FIG. 6) for transferring the seeds and some air from the seed disk housing 52 to the ground via an outlet chute 84 (FIG. 2).

In operation, seeds are dispersed from the storage tank 38 to the mini-hopper 50 via the seed on-demand system 30 and distribution system 36, entering the mini-hopper 50 through the seed inlet 60. The seeds collect within the mini-hopper 50. The motor 72 is actuated by a controller 40 to rotate the seed disk 54 (via the interface of meshing teeth 54A, 70A). Simultaneously, the vacuum source is actuated to create a pressure differential across the seed disk 54, thereby providing a suction force at the seed openings 78 and holding the seeds against the seed openings 78 as the disk 54 rotates. The singulator knocks off extraneous seeds (those seeds not within one of the seed openings 78) such that each seed opening 78 corresponds to a single seed. Once rotated past the singulator and vacuum cut-off, the seeds are ejected from the seed opening 78 and fall down the seed outlet 82 and to the ground to be planted.

The seed meter is mounted to a frame via a bracket. As shown best in FIG. 8, the mount 110 includes a meter mounting portion 114, a motor mounting portion 116, and a controller mounting portion 118. The three mounting portions 114, 116, 118 may be formed of a single component, or may otherwise be formed by multiple components attached (e.g., fastened, welded) to one another. The meter mounting portion 114 extends between two frame mounting points 120A, 120B, where the mount 110 is fastened to the frame 112. Specifically, fasteners 122 (e.g., threaded fasteners, rivets, etc.) extend through the frame 112 and into the mount 110 to fix the mount 110 to the frame 112. The frame mounting points 120A, 120B are axially offset from one another to distribute the holding forces in multiple planes. The location and orientation of the mounting points 120A, 120B shown in FIG. 8 further dictates that the meter mounting portion 114 includes a bend 126 to facilitate alignment with the mounting points 120A, 120B.

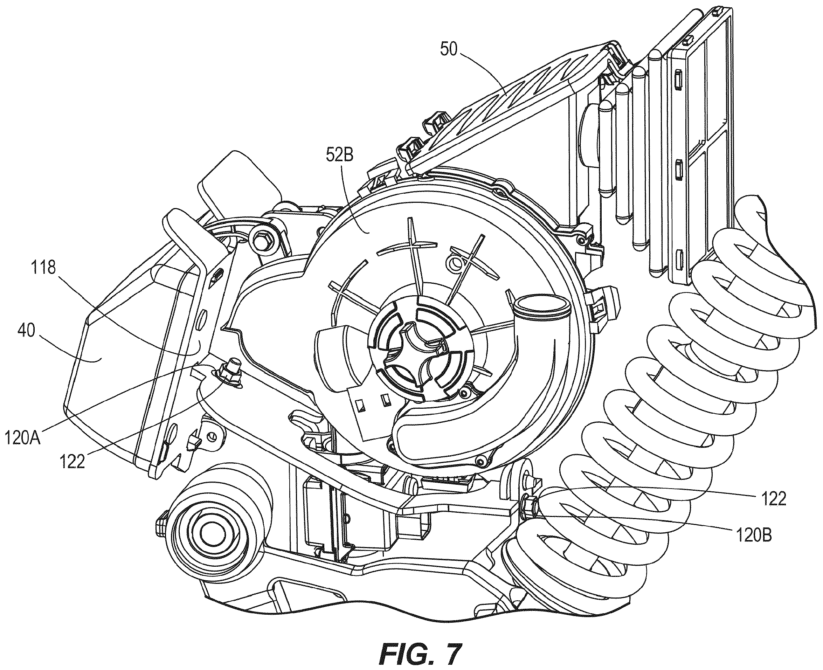

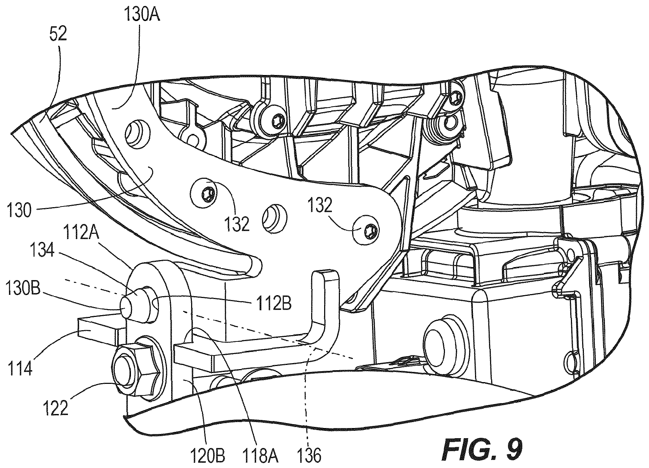

As shown in FIG. 9, the frame 112 includes a tab 112A that extends through a cutout or slot 118A in the meter mounting portion 114. The tab 112A includes an aperture 112B to function as a pivot point for the seed meter 44. More specifically, a bracket 130 is attached to the seed meter housing 52 (the first side of the seed meter housing 52A) with fasteners 132 (e.g., threaded fasteners) at a proximal end 130A and extends away from the seed meter 44 to a distal end 130B defined by a pivot member 134. The pivot member 134 is insertable into the aperture 112B in the tab 112A and is moveable within the aperture 112B such that the seed meter housing 52 is rotatable about a rotational axis 136 at the pivot member 134 between a disengaged position (FIG. 6) and an engaged position (FIG. 7).

Referring once again to FIG. 8, the motor mounting portion 116 of the mount 110 extends perpendicularly from the meter mounting portion 114. The motor mounting portion 116 includes motor mounting points (not shown) for attaching and fixing the motor 72 to the mount 110. An aperture 138 extends through the motor mounting portion 116. With the motor 72 mounted to the motor mounting portion 116, the output shaft of the motor 72 extends through the aperture 138 such that the motor output gear 70 (mounted to the shaft) is on the side of the motor mounting portion 116 opposite the motor 72. A boss feature 140 surrounds the output gear 70 and the aperture 138 and includes a non-planar engagement surface 142.

It may not always be advantageous or desired to singulate the seeds using the singulating meter 44 as described herein. In some embodiments, it may be desirable to volumetrically meter the seeds rather than singulate. For example, seed size or type may affect a decision whether to meter volumetrically or via singulation. When volumetrically metering seeds, the seeds are not individually separated from the group of seeds (i.e., in the mini hopper), but are rather fed to the ground in a metered grouping such that a rate (e.g., seeds per minute, weight of seeds per minute) can be estimated and adjusted as necessary.

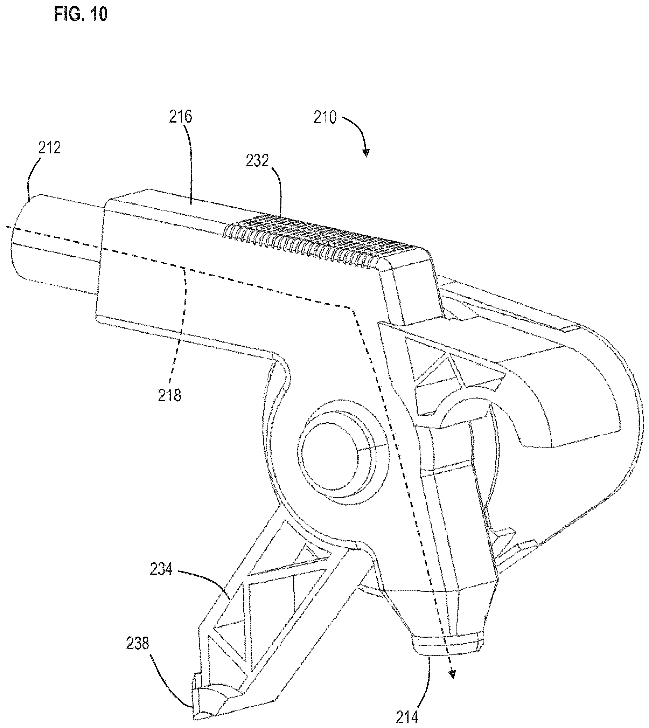

In a first embodiment, as shown in FIGS. 10-11B, the meter 44 (i.e., the housing 52, the seed disk 54, the mini hopper 50, and other associated components), which is an example of a singulating meter element, is removed from the frame 112 or bracket 130 and a replacement housing 210, which is a volumetric meter element, is mounted in its place. The replacement housing 210 includes an inlet 212, an outlet 214, and a body 216 defining a passageway 218 extending therebetween. Further, the housing 210 is sized to engage the frame 112 at the same locations as the singulating meter 44. Therefore, when the singulating meter 44 is removed, the replacement housing 210 can be mounted in the same location with the same hardware 122, 132.

The inlet 212 of the housing 210 is arranged to receive seeds from the storage tank 28 and the seed on-demand system 30. For example, the inlet 212 is coupled to a passageway (not shown) located downstream of the tank 28, nozzle, and fan 34. As shown, the placement of the inlet 212 of the housing 210 is similar to the placement of the inlet 60 of the mini-hopper 50 of the singulating meter 44 such that when the singulating meter 44 and mini-hopper 50 are removed from the bracket 130 and/or frame 112 and replaced by the housing 210, the inlet 212 of the housing 210 can be coupled to the same passageway previously coupled to the inlet 60 of the mini-hopper 50. Therefore, the upstream passageway does not need to be repositioned or replaced to provide a closed path 218 for the seeds from the seed on-demand system 30 to the ground.

Similarly, when the housing 210 is mounted to the bracket 130 and/or frame 112, the outlet 214 of the housing 210 is arranged to couple to the inlet 82 of the seed outlet 84, such that seeds that pass from the inlet 212 of the housing 210, through the body 216 of the housing 210, and to the outlet 214 of the housing 210 then pass through the seed outlet 84 (similar to when the seeds are singulated as described herein).

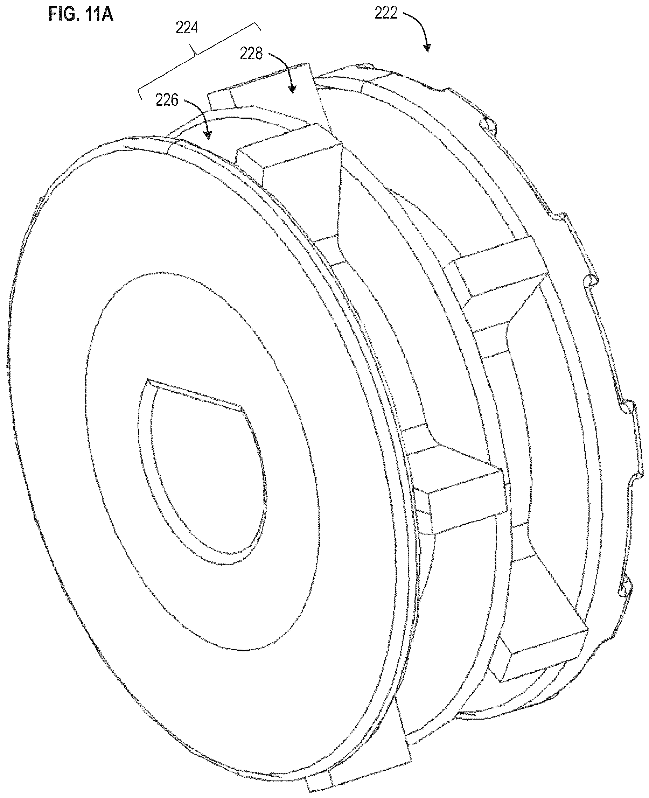

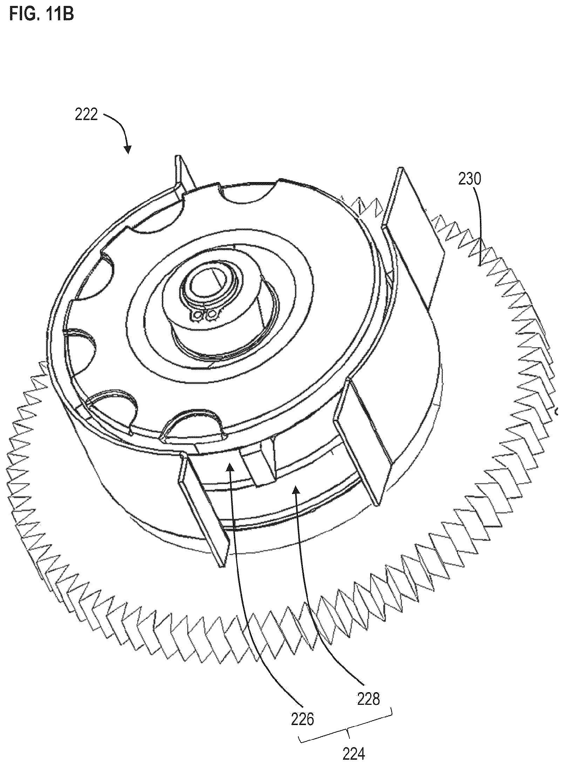

The body 216 of the housing 210 extends between the inlet 212 and the outlet 214 and defines a path therebetween. In some embodiments, such as embodiments in which a volumetric meter (not shown) is located upstream of the body, the path 218 is without a singulating meter element such that when the singulating meter 44 is replaced by the housing 210, the housing 210 functions as an extension of the seed tube that utilizes the mounting points of the singulating meter 44. In such embodiments, the housing 210 may include passive elements (e.g., unmoving protuberances or guides) therein that modify the flow or path of the seeds. In other embodiments, as shown in FIGS. 11A-11B, the body houses a volumetric meter roller 222, which is a volumetric meter element, for volumetrically metering the seeds within the body 216 of the housing 210.

The meter roller 222 is positioned within the seed path 218 in the body 216 such that seeds passing from the inlet 212 to the outlet 214 must first pass through the meter roller 222. The meter roller 222 includes delineated cutouts or buckets 224 for receiving seeds. As the roller 222 rotates, the seeds within the buckets 224 are transferred from an upstream side (inlet side, between the inlet 212 and the meter roller 222) of the body 216 to a downstream side (outlet side, between the meter roller 222 and the outlet 214) of the body 216. As only a predefined amount of seeds fit within the buckets 224 at one time, the volumetric rate of seeds passing through the meter roller 222 (and to the seed tube 84) can be modified by adjusting the rotational speed of the roller 222.

The roller 222 includes a first set of buckets 226 positioned axially adjacent to a second set of buckets 228. The first and second sets of buckets 226, 228 are rotationally offset from one another so that first and second buckets 226, 228 empty at the downstream side at different times. The roller 222 is attached to a geared wheel 230 (or other transmission assembly) for rotation therewith. The geared wheel 230 engages the motor 72 of the singulating assembly to drive the metered roller 222, similar to driving the seed disk 54 of the singulating meter 44.

As shown in FIG. 10, the body 216 of the housing 210 includes air flow exhaust screens 232. The exhaust screens 232 permit air to be expelled from the body 216 upstream of the roller 222 so that the seed on-demand system 30 only provides a limited number of seeds to the housing 210 so as to avoid overfilling the housing 210 upstream of the roller 222. The area within the body 216 of the housing 210 directly upstream of the roller 222 is capable of functioning similar to a mini-hopper within the seed on-demand system 30. When the exhaust screens 232 are covered by the seeds located upstream of the roller 222 in the body 216 of the housing, a back-pressure is generated that slows the upstream air stream velocity to the point where the air stream will no longer pick up seeds at the nozzle, and will not deliver additional seeds to the housing 210 and roller 222 until the level of seeds within the body 216 upstream of the roller 222 decreases to decrease the back-pressure.

As shown, the inlet 212 of the housing 210 is located at a first height and the outlet 214 is located at a second height less than the first height. Therefore, when the seeds are introduced into the housing 210, gravity, in combination with the inlet velocity of the seeds into the housing 210, carries the seeds from the inlet 212 to the outlet 214.

A mounting structure 234 extends from the body 216 of the housing 210. When the inlet 212 of the housing 210 is arranged to receive seeds from the upstream seed tank 28 and the outlet 214 of the housing 210 is aligned with the seed outlet 84 to direct the seeds to the ground, the mounting structure 234 is aligned with the bracket 130 and/or frame 112 such that a fastener 122, 132 extends through the mounting structure 234 and the bracket 130 and/or frame 112 to fasten the housing 210 to the frame 112. The fasteners 122, 132 can be the same fasteners used to hold the singulating meter 44 to the bracket 130 and/or frame 112 at the same location.

To convert the singulating meter assembly 44 to the volumetric metering assembly 210, the operator removes the pivot member 134 from the aperture 112B in the frame 112. The mounting structure 234 may include a bracket similar to the bracket 130 to engage the aperture 112B in the frame 112 with a similar pivot member. Alternatively, the mounting structure 234 may include a pivot member 238 (similar to pivot member 134) integrally formed thereon. With this arrangement, the singulating meter assembly 44 and the volumetric metering assembly 210 are separately attachable and removable from the frame 112 without tools.

Alternatively, to convert the singulating meter assembly 44 to the volumetric metering assembly 210, the operator removes the fasteners 122, 132 coupling the meter 44 to the frame 112 and/or bracket 130, disconnects the seed tube 84 from the meter housing 52, and disconnects the mini-hopper inlet 60 from the upstream channel. The operator then attaches the replacement housing 210 to the bracket 130 and/or frame 112 and completes the seed flow path by attaching the upstream channel to the inlet 212 of the replacement housing 210 and attaching the seed tube 84 to the outlet 214 of the replacement housing 210. The operator then provides an input to the controller 40, indicating that the system is operating in a volumetric metering mode rather than a singulating mode, such that the operation of the motor 72 is either cancelled (if the housing 210 is without a meter roller 222) or is modified (if the housing 210 has a meter roller 222) to rotate the meter roller 222 at a predetermined speed. The predetermined speed may be modified based on seed type, vehicle speed, desired seeding rate, or other vehicle or environmental features.

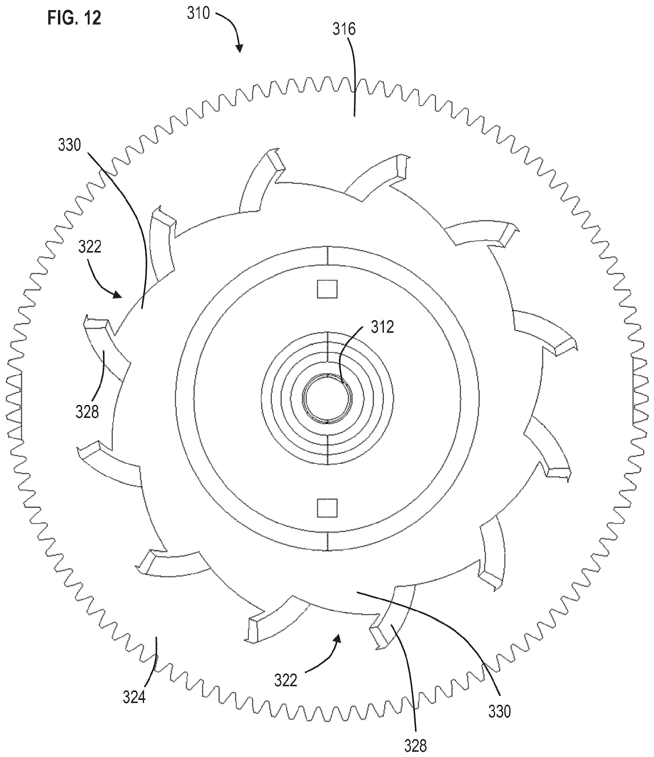

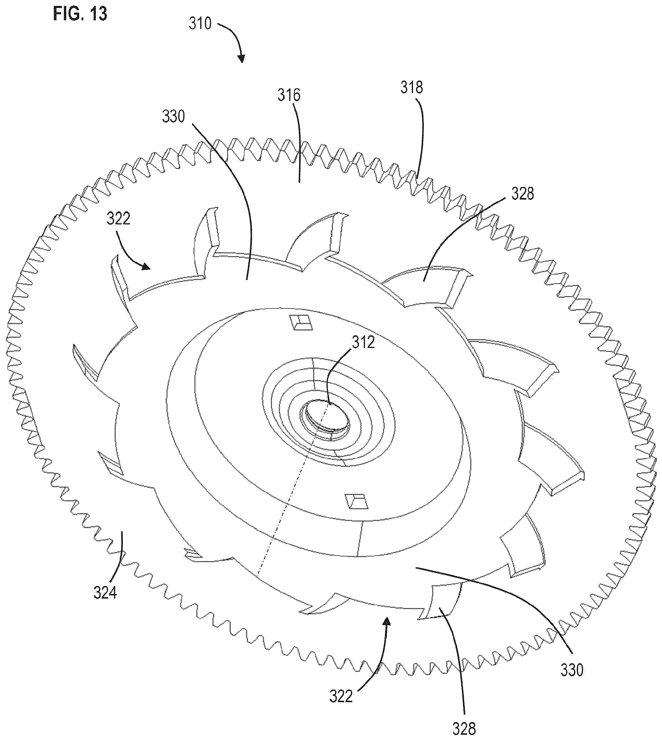

In a second embodiment, as shown in FIGS. 12-13, to convert the singulating meter 44 into a volumetric meter, the singulating meter housing 52 (as shown in FIGS.1-5B) remains attached to the frame 112 directly and via the bracket 130, and the singulating meter disk 54 (a singulating meter element) is removed from the housing 52. A replacement disk (a volumetric metering disk 310), which is a volumetric metering element, is mounted in place of the singulating meter disk 54.

As described herein and shown in FIGS. 5A and 5B, the singulating disk 54 includes a plurality of spaced-apart seed openings 78 that extend axially through the disk 54, each opening 78 sized to attract and accept a single seed. In contrast, the volumetric metering disk 310 does not include individual seed apertures. The seed disk 310 is mounted to the rotational hub 66 in a similar manner to the singulating disk 54, rotatable about a central opening 312. The disk 310 has a front, seed side 316 facing the plurality of seeds and mini-hopper outlet 62 and a rear side 318, opposite the front side 316. Further, the seed disk 310 is sized similar to the singulating seed disk 54 and with a similar diameter, such that the radial gaps between the disk 54 and the housing 52 are similar.

In contrast to the singulating disk 54, the volumetric disk 310 does not rely upon airflow or vacuum to hold the seeds against the disk 310. Rather, buckets 322 are located on the seed side 316 of the disk 310. The disk 310 includes a plurality of buckets 322 arranged radially along the front face 316 of the disk 310. As the disk 310 rotates within the housing 52, the buckets 310 rotate therewith and take turns dipping into the collection of seeds piled at the outlet 62 of the mini-hopper 50 within the housing 52. The bucket 322 gathers an amount of seeds. The amount of seeds is predetermined based on the size (e.g., volume) of the bucket 322 and limits the number of seeds (and therefore the rate of seeding) gathered by each bucket 322 as the disk 310 rotates.

The volumetric seed disk 310 is a plate 324 having a thin, flat, circular shape similar to the size and shape of the singulating disk 54. The thickness of the disk 310 is defined between the first, seed-facing side 316 and the second side 318, opposite the first side 316. The buckets 322 protrude axially outward from the first side 316 of the generally plate-shaped disk 324. In other embodiments, the buckets 322 may be recessed into the disk 310. As shown, the seed disk 310 includes twelve individual buckets 322, each spaced apart from one another (e.g., 30 degrees apart from one another) centered about the mounting point (through hole 312) on the front face 316 of the disk 310. In other embodiments, the mounting point may be a blind hole or protrusion for mounting relative to the housing 52. Each bucket 322 is defined at least by the front surface of the disk 316, a trailing surface 328, and an outer surface 330. The trailing surface 328 defines a base of the bucket 322 as the disk 310 is rotated. For example, as the disk 310 rotates (via engagement between gear teeth), the trailing surface 328 follows the seeds within that bucket 322. The outer surface 330 is offset from the front, plate-like surface 316 of the disk 310 and may, for example, be parallel to the front surface 316.

As shown, each bucket 322 is evenly sized and is located an equivalent distance from the center of rotation, relative to one another. Therefore, the metering is substantially equal at all times the disk 310 is rotating. In other embodiments, the size and/or relative position of the buckets 322 along the disk may vary such that the seeding rate is cyclical with the rotation of the disk 310.

The second embodiment therefore operates by gathering a plurality of seeds from a low position, at the base of the meter housing 52 (where the seeds are fed from the mini-hopper 50 via gravity), into a bucket 322 on the volumetric seed disk 310. The seeds are carried by the bucket 322 over the upper apex of the seed disk 310 where the bucket is unable to retain the seeds and disposes of the seeds into the seed outlet 82 at a high position, relative to the position at which the seeds are gathered. The disk 310 therefore functions as a bottom-fill, top-drop meter.

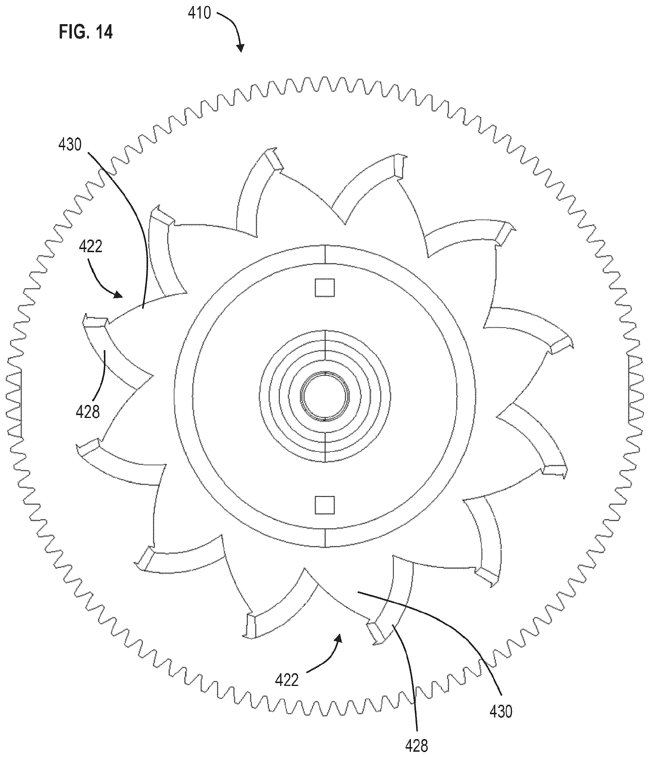

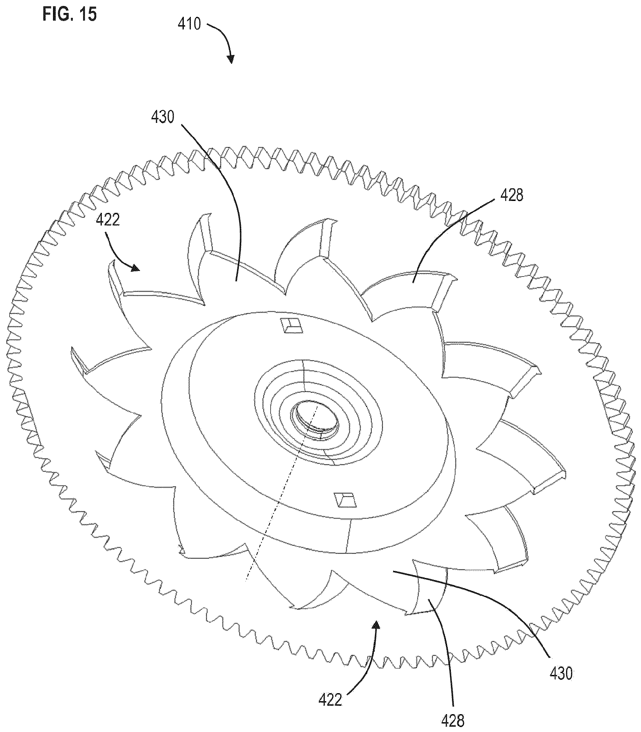

A third embodiment is shown in FIGS. 14-15 that is similar to the second embodiment, except as otherwise described. Different seeds may require different designs (i.e., shapes, sizes) of the buckets 422 to facilitate the desired feeding rate for that type of seed. In particular, smaller seeds may require smaller sized buckets 422 than those of larger seeds. In combination with modifying the rotational speed of the seed disk 410, the differently sized buckets facilitate the ability to volumetrically meter a plurality of different types of seeds. Further, by modifying the outer surface 430 and/or the trailing surface 428 of the bucket 422, the rate at which the seeds exit the individual bucket 422 can additionally be modified.

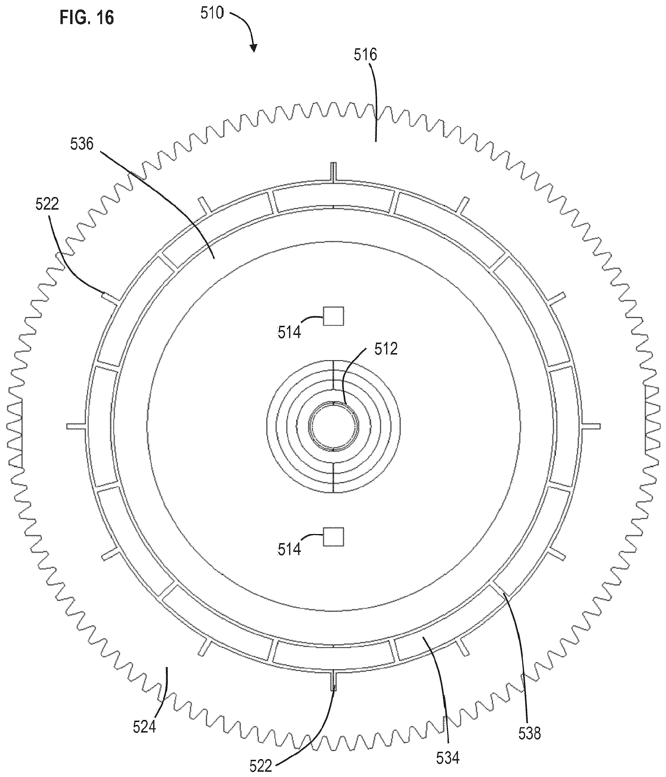

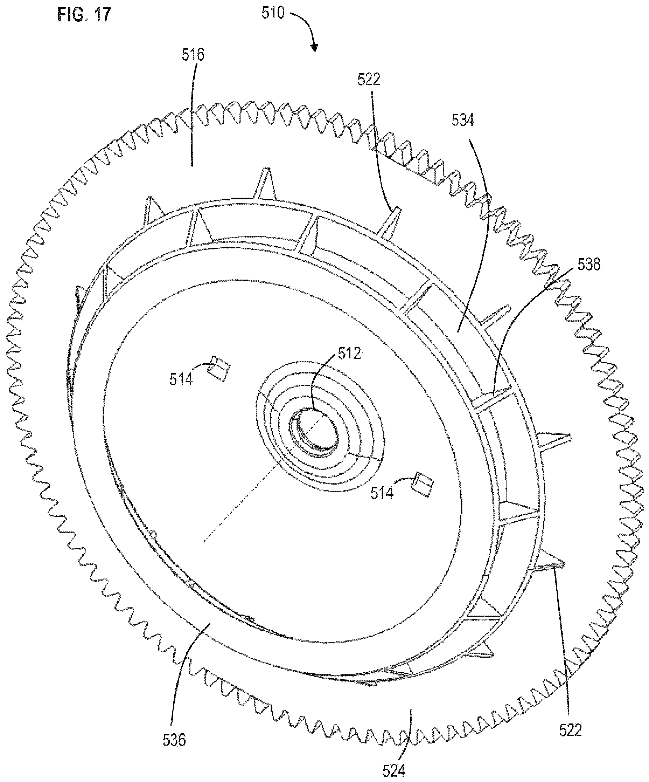

In a fourth embodiment, as shown in FIGS. 16-17, similar to the second and third embodiments, the singulating seed disk 54 is removed from the seed disk housing 52 and replaced with a different seed disk 510, which is a volumetric meter element, such that the seeds are no longer singulated. In contrast to the seed disks 310, 410 of the second and third embodiments, the seed disk 510 of the fourth embodiment does not have buckets but is rather defined by paddles 522 of a water wheel arrangement. The seed disk 510 includes a planar geared plate 524 similar in size and shape to the singulating seed disk 54 shown and described herein, but without the individual holes for attracting the individual seeds. Rather the disk 510 has no through holes except for the openings 512, 514 that facilitate mounting the seed disk 510 for rotation relative to the seed disk housing 52.

A first ring 534 extends from the planar disk 524, the first ring 534 extending parallel to the planar disk 524 and sharing a central axis with the planar disk 524. The first ring 534 is defined between an inner (circular) diameter 534A and an outer (circular) diameter 534B that is smaller (i.e., smaller diameter) than the outer diameter 524A of the planar disk 524. The first ring 534 is axially spaced apart from the planar disk 524 and is attached to the planar disk 524 via a plurality of spaced apart paddles 522. As shown, twelve paddles 522 extend between the planar disk 524 and the first ring 534 to attach the ring 534 to the plate 524. Each paddle 522 is separated from the next adjacent paddle 522 by an equal distance (e.g., 30 degrees).

A second ring 536 extends from the first ring 534 and, similar to the first ring 534, is parallel to and centered with the planar disk 524 and therefore also parallel to and centered with the first ring 534. The second ring 536 is defined between an inner (circular) diameter 536A and an outer (circular) diameter 536B that is smaller than the outer diameter 534B of the first ring 534. The second ring 536 is spaced apart from and attached to the first ring 534 via a second plurality of paddles 538. Similar to the paddles 522 that attach the first ring 534 to the planar disk 524, twelve paddles 538 attach the second ring 536 to the first ring 534. The twelve paddles 538 are similarly equally spaced apart from one another, and are further offset from the paddles 522 of the first ring 534. The second plurality of paddles 538 is rotationally offset from the first plurality of paddles 522 such that they are centered within the gaps between the adjacent paddles 522 of the first plurality of paddles 522. With each of the first and second plurality of paddles 522, 538 including twelve paddles, the rotational gap between adjacent first and second paddles 522, 538 is fifteen degrees.

The first and second rings 534, 536 extend axially from the planar disk 524 by first and second distances, respectively, where the second distance is greater than the first. The first and second rings 534, 536 each extend from the seed side of the planar disk 524 (i.e., the side that faces the seeds from the mini-hopper 50) into the seed side 516 of the seed disk housing 52.

When the seed disk 510 is rotated, the paddles 522, 538 move through the seeds that have collected within the seed disk housing 52 from the mini-hopper 50. As the disk 510 rotates and the paddles 522, 538 likewise rotate, each paddle 522, 538 pushes a plurality of the seeds from the collected pile of seeds to the seed outlet 82 and the seed tube 84. The disk 510 therefore operates as a bottom-fill, bottom-drop meter. In some embodiments, the seed disk 510 is rotated in a direction opposite that for singulating to drop the seeds. In contrast to the singulating disk 54 and the metering disks 310, 410 described in the second and third embodiments, the seeds are not carried around and over the upper apex of the disk 510 but instead remain at or below the lower half of the disk 510 until dropped into the seed tube 84.

In the second, third, and fourth embodiments described herein, the seeding system is interchangeable between a singulating mode of operation and a volumetric mode of operation by switching one disk 54 with another disk 310, 410, 510. To convert from a singulating meter to a volumetric meter, the singulating disk 54 is replaced by the volumetric disk 310, 410, 510. To convert from a volumetric meter to a singulating meter, the volumetric disk 310, 410, 510 is replaced by the singulating disk 54.

An operator is able to use the same seed cart and same seed cart frame 112 to volumetrically meter and singulate seeds by replacing a singulating meter element such as the seed disk 54 or the seed disk housing 52 with a volumetric meter element such as the housing 210, the meter roller 222, or the disks 310, 410, 510. By reusing the attachment points, the same fasteners 122, 132 can be reused for both the volumetric and singulating systems and the operator is quickly able to identify how the different systems attach to the base frame 112.

## Claims

1. A metering assembly (30, 30', 210) for metering a plurality of seeds, the metering assembly (30, 3 0', 210) comprising:
a support; and
a seed disk;
the seed disk comprising a first side, a second side opposite the first side and a central mounting point defining a center of rotation for the seed disk;
**characterized in that**
the metering assembly (30, 30', 210) is an interchangeable metering assembly (30, 30', 210) operable in a first and in a second mode of operation,
wherein in the first mode of operation the seed disk comprising a singulating meter element (54) configured to mount to the support for singulating the plurality of seeds; and
wherein in the second mode of operation the seed disk comprising a volumetric meter element (222, 310, 410, 510) configured to mount to the support for volumetrically metering the plurality of seeds.

2. The metering assembly (30, 30', 210) of claim 1, wherein the volumetric metering element (222, 310, 410, 510) extending from the first side of the seed disk, the volumetric metering element (310, 410, 510) configured to entrain a plurality of seeds.

3. The metering assembly (30, 30', 210) of claim 2, wherein the volumetric metering element (222, 310, 410, 510) defines a bucket (224, 226, 228, 322, 422), and wherein the bucket (224, 226, 228, 322, 422) is configured to entrain the plurality of seeds.

4. The metering assembly (30, 30', 210) of claim 3, wherein the bucket is a first bucket of a plurality of buckets (224, 226, 228, 322, 422), wherein each bucket (224, 226, 228, 322, 422) of the plurality of buckets (224, 226, 228, 322, 422) is equally spaced about the central mounting point of the seed disk.

5. The metering assembly (30, 30', 210) of claim 1, wherein the volumetric metering element (222, 310, 410, 510) defines a paddle (522), and wherein the paddle (522) is configured to entrain the plurality of seeds.

6. The metering assembly (30, 30', 210) of claim 5, wherein the paddle (522) is a first paddle of a plurality of paddles (522), wherein each paddle (522) of the plurality of paddles is equally spaced about the central mounting point of the seed disk.

7. The metering assembly (30, 30', 210) of claim 5 or 6, wherein the paddle (522) extends perpendicularly from the first side of the seed disk to a ring (534) oriented coaxial with the seed disk.

8. The metering assembly (30, 30', 210) of claim 7, wherein the paddle is a first paddle (522) and the ring (534) is a first ring, the seed disk further comprising a second paddle (538) that extends parallel to the first paddle (522) between the first ring(534) and a second ring (536), wherein the second ring (536) is coaxial with the first ring (534), and wherein the first ring (534) is located between the first side (516) of the seed disk and the second ring (536).

9. The metering assembly (30, 30', 210) of one of the claims 1 to 8, further comprising a meter housing, wherein the support is a rotational hub (66), wherein the singulating meter element is a singulating disk configured to rotate about the rotational hub (66), and wherein the volumetric metering element (222, 310, 410, 510) is a volumetric metering disk configured to rotate about the rotational hub (66).

10. The metering assembly (30, 30', 210) of one of the claims 1 to 9, wherein the support is a bracket, wherein the singulating meter element is a singulating meter housing configured to house a singulating disk (54), and wherein the volumetric metering element (222, 310, 410, 510) is a volumetric meter housing.

11. The metering assembly (30, 30', 210) of claim 10, wherein the volumetric meter housing includes a meter roller (222) configured to volumetrically meter the plurality of seeds.

12. The metering assembly (30, 30', 210) of claim 10, further comprising an outlet conduit configured to direct the plurality of seeds to a ground surface, wherein the singulating meter housing is configured to direct the plurality of seeds to the outlet conduit in the first mode of operation, and wherein the volumetric meter housing is configured to direct the plurality of seeds to the outlet conduit in the second mode of operation.

13. The metering assembly (30, 30', 210) of one of the claims 1 to 12, further comprising a motor programmed to actuate the singulating meter element in the first mode of operation and programmed to actuate the volumetric meter element (222, 310, 410, 510) in the second mode of operation.

14. The metering assembly (30, 30', 210) of one of the claims 9 to 13, wherein the seed disk separates the housing into a seed side and a non-seed side, wherein the first side of the seed disk faces the seed side of the housing such that the volumetric metering element (222, 310, 410, 510) is configured to entrain a predetermined quantity of seeds from the seed side of the housing.
